# EUROPÄISCHE PATENTANMELDUNG

(11) **EP 1 488 884 A2**
(43) Veröffentlichungstag der Anmeldung: **22.12.2004**
(21) Anmeldenummer: 04012728.4
(22) Anmeldetag: 28.05.2004
(51) Int. Cl.: B23Q 7/03, B23Q 7/14

(54) **Fertigungslinie**

(30) Priorität: 06.06.2003 DE 10325878
(71) Anmelder: Grob-Werke Burkhart Grob e.K., 87719 Mindelheim (DE)
(72) Erfinder: Burkhart, Grob Dr.h.c., 86825 Bad Wörishofen (DE); Lutz, Heinrich, 87742 Dirlewang (DE)
(74) Vertreter: Pfister, Stefan Helmut Ulrich

(57) **Zusammenfassung**

Die Erfindung betrifft eine Fertigungslinie, bestehend aus mindestens zwei Bearbeitungsmaschinen, welche Werkstücke bearbeiten. Die Werstücke werden auf einer Anförderbahn von einer Transportbahn zu der Bearbeitungsmaschine gefördert. Nach der Bearbeitung werden die Werkstücke von einer Abförderbahn von der Bearbeitungsmaschine zu einer Transportbahn gefördert. Anund Abförderbahn sind in verschiedenen Ebenen übereinander angeordnet.

## Beschreibung

Die Erfindung betrifft eine Fertigungslinie, bestehend aus mindestens zwei Bearbeitungsmaschinen, welche Werkstücke bearbeiten und die Werkstücke auf einer Anförderbahn von einer Transportbahn zu der Bearbeitungsmaschine gefördert werden und von einer Abförderbahn von der Bearbeitungsmaschine zu einer Transportbahn gefördert werden.

Eingangs beschriebene Fertigungslinien sind bekannt. Bei diesen werden zum Beispiel eine Anförderbahn links von der Bearbeitungsmaschine angeordnet und die Abförderbahn auf der rechten Seite. Ein fertig gearbeitetes Werkstück wird daher auf einer anderen Förderbahn von der Bearbeitungsmaschine wegtransportiert, ohne das Nachfördern des nächsten Werkstückes zu behindern.

Nachteilig bei einer solchen Ausgestaltung ist, daß eine solche Anordnung von An- und Abförderbahn sehr platzaufwendig ist und auch die freie Zugänglichkeit an die Bearbeitungsmaschine beeinträchtigt.

Ausgehend von diesem Stand der Technik hat es sich die Erfindung zur Aufgabe gemacht eine Anordnung zu finden, die möglichst platzsparend ist.

Zur Lösung dieser Aufgabe geht die Erfindung aus von einer Fertigungslinie wie eingangs beschrieben und schlägt vor, daß An- und Abförderbahn in verschiedenen Ebenen übereinander angeordnet sind.

Die Erfindung erreicht eine erhebliche Platzeinsparung. Notwendigerweise ist die Bearbeitungsmaschine mit der Transportbahn zum Fördern des Werkstückes zu verbinden. Wird aber die Abförderbahn über oder unter der Anförderbahn angeordnet, wird für die zweite Förderbahn kein zusätzlicher Platz benötigt. Die Erfindung erreicht damit auch ein hohe Zugänglichkeit der Bearbeitungsmaschine, da nur ein Bereich durch An- beziehungsweise Abförderbahn blockiert ist, hingegen im Stand der Technik zwei durch An- beziehungsweise Abförderbahn versperrt sind. Der erfindungsgemäße Vorschlag erleichtert aber auch erheblich den Weitertransport der bearbeitenden Teile, da auch die Transportbahn beziehungsweise die Anordnung der Transportbahn in der Fertigungslinie erheblich vereinfacht werden kann.

Nach der Erfindung wird auf der Anförderbahn das noch nicht bearbeitete Rohteil zur Bearbeitungsmaschine transportiert und auf der Abförderbahn das bearbeitete Teil wieder wegtransportiert. Das Werkstück muß also von der An- auf die Abförderbahn gelangen. Gemäß der Erfindung sind hierzu mehrere Konzepte möglich.

Zunächst wird erfindungsgemäß vorgeschlagen, daß die Bearbeitungsmaschine einen bewegbaren Werkstückschlitten für das Werkstück aufweist und die Bewegung des Werkstückschlittens für einen Transport des Werkstückes von der Ebene der Anförderbahn zu der Ebene der Abförderbahn dient. Dieser Werkstückschlitten, der vertikal verschiebbar ist, ist in den Bearbeitungsmaschinen sowieso vorgesehen, um zum Beispiel als Y-Achse eine Positionierung des Werkstückes für Bearbeitungszwecke auszuführen. Wird aber das Werkstück herein- oder heraustransportiert, wird normalerweise der Werkstückschlitten für Bearbeitungszwecke nicht benötigt, er steht still. Üblicherweise wird der Werkstückschlitten dann sowieso in die jeweilige Wechselposition verfahren. Die sowieso bereits vorhandene Bewegungsachse des Werkstückes wird nach diesem erfindungsgemäßen Vorschlag dafür ausgenutzt, z. B. das Werkstück in eine anderen Ebene auf die Abförderbahn zu bringen.

In einer anderen Variante der Erfindung ist vorgesehen, daß die Fertigungslinie einen Aufzug für das Werkstück aufweist, der für einen Transport des Werkstückes von der Ebene der Anförderbahn zu der Ebene der Abförderbahn dient. Ein solches Konzept kann zum Beispiel dann eingesetzt werden, wenn das Werkstück auf der gleichen Ebene aus der Bearbeitungsmaschine heraustransportiert wird, wie es eintransportiert wurde. Zum Beispiel ist die Abförderbahn in dieser Variante deutliche länger als die Anförderbahn und überragt diese bis zu der Ausgabestelle an der Bearbeitungsmaschine, von wo aus der Aufzug das ausgeförderte Werkstück zur Abförderbahn transportiert. Eine gleiche Anordnung ist natürlich auch umgekehrt möglich, zum Beispiel derart, daß die Anförderbahn länger ausgebildet ist als die Abförderbahn. Auch ist es möglich, daß entweder das Rohteil oder das bearbeitete Werkstück vor beziehungsweise nach der Bearbeitung durch den Aufzug bewegt wird. Der Aufzug kann natürlich auch in der Transportbahn angeordnet sein.

In einer weiteren Variante der Erfindung ist es vorgesehen, daß zwischen der Transportbahn und der Anförderbahn und/oder der Abförderbahn eine Übersetzereinheit vorgesehen ist.

Die Übersetzereinheit leistet, daß das Werkstück von der Transportbahn auf die winklig daran anschließende An- beziehungsweise Abförderbahn übergesetzt wird. Dabei ist es zum Beispiel möglich, daß die Übersetzeinheit wie ein Aufzug ausgebildet ist, insbesondere dann, wenn die Transportbahn sowohl für die Anförderbahn wie auch für die Abförderbahn gleichzeitig vorgesehen ist. Auch hier sind wieder mehrere Varianten möglich. Zum Beispiel ist vorgesehen, daß die Transportbahn entweder mit der Anförderbahn oder mit der Abförderbahn auf gleicher Ebene ist und ein einfaches Verschieben des Werkstückes ausreicht, um dieses von der Transportbahn auf die auf gleichem Niveau liegende Förderbahn zu bringen. Das Werkstück, welches auf der darunter oder darüber liegenden, anderen Anförderbahn liegt, wäre dann durch einen Aufzug oder durch eine entsprechend bewegliche Übersetzereinheit auf die Transportbahn zu bringen oder zu holen.

Die Übersetzereinheit ist zum Beispiel roboterartig ausgebildet und der Roboterarm legt das Werkstück auf. Eine weitere Möglichkeit besteht darin, daß die Transportbahn zwischen Anförderbahn und Abförderbahn angeordnet ist. Neben Übersetzereinheiten, die eine gewisse eigene Beweglichkeit aufweisen, sind aber auch verhältnismäßig passive Übersetzereinheiten möglich, die zum Beispiel wie Rampen ausgebildet sind. Zum Beispiel befindet sich die Anförderbahn unterhalb der Transportbahn und ein zu bearbeitendes Werkstück wird aus dem Strom auf der Transportbahn zum Beispiel mit Anschlägen ausgeschleust und auf einer Rampe auf die untenliegenden Anförderbahn gebracht. Umgekehrt ist es möglich, die Abförderbahn über dem Niveau der Transportbahn anzuordnen und ein Gut durch eine Rampe wieder in den Strom der Transportbahn einzuschleusen.

Grundsätzlich erlaubt die Erfindung eine parallele Anordnung von An- und Abförderbahn, es ist natürlich aber auch von der Erfindung umfaßt, An- und Abförderbahn winklig zueinander, sich kreuzend oder nebeneinander verlaufend zu realisieren.

Gemäß der Erfindung ist vorgesehen, daß An- und Abförderbahn entweder mit ein und derselben Transportbahn zusammenwirken oder aber, wie eine weitere erfindungsgemäße Variante vorsieht, eine erste Transportbahn für die Anförderbahn und eine zweite Transportbahn für die Abförderbahn vorgesehen ist.

Für den Fall, daß eine erste und eine zweite Transportbahn vorgesehen ist, ist es günstig, daß auch diese beiden Transportbahnen übereinander angeordnet sind, wodurch sich der Aufwand für das Umsetzen der Werkstücke erheblich reduziert.

Die Erfindung beschränkt sich nicht darauf, daß nur eine Transportbahn für die An- und Abförderbahn vorgesehen ist, die Erfindung umfaßt in gleicher Weise auch eine Anordnung, bei welche je eine Transportbahn für An- und Abförderbahn vorgesehen sind. Zwar erhöht sich durch diesen Vorschlag der Aufwand für die Realisierung der Transportbahn, der Materialfluß von Werkstücken durch die vielen Bearbeitungsmaschinen wird aber dadurch etwas strukturierter und daher auch einfacher im Betrieb und die Stillstandszeit für die Bearbeitungsstation zum Be- und Entladen wird erheblich reduziert.

Gemäß der Erfindung ist vorgesehen, daß das Werkstück entweder unmittelbar auf der Transportbahn beziehungsweise den Förderbahnen bewegt wird, oder das Werkstück auf einer Palette aufmontiert ist und mit dieser transportiert wird.

In einer vorteilhaften Ausgestaltung der Erfindung ist vorgesehen, daß für den Transport des Werkstückes beziehungsweise die das Werkstück tragende Palette eine Vorrichtung vorgesehen ist und die Vorrichtung entlang der An- beziehungsweise Abförderbahn bewegbar ist. Sinngemäß sind natürlich je eine einzelne Vorrichtung für die An- und Abförderbahn vorgesehen, die Anund Abförderbahn hierfür sind aber gleichartig ausgebildet. Dadurch wird der Aufwand für die Realisierung solcher Vorrichtungen erheblich reduziert. Die Erfindung schließt aber eine Variante nicht aus, wo eine höhenverstellbare Vorrichtung für An- und Abförderbahn vorgesehen ist.

Alternativ ist es möglich, auf eine spezielle Vorrichtung für den Transport des Werkstückes beziehungsweise der Palette zu verzichten und die Förderbahn wie die Transportbahn, zum Beispiel als Rollenbahn auszugestalten. Die Vorrichtung hat aber noch, wie weiter unten angegeben werden wird, weitere Vorteile.

Zunächst wird erfindungsgemäß vorgeschlagen, daß das Werkstück, beziehungsweise die das Werkstück tragende Palette von der ersten Vorrichtung von der ersten Transportbahn abgehoben beziehungsweise von der zweiten Vorrichtung auf der zweiten Transportbahn abgesetzt wird.

Die Vorrichtung hat dabei eine ähnliche Aufgabe wie die zuvor beschriebene Übersetzereinheit, sie sorgt dafür, daß das Werkstück von der Transportbahn zur Anförderbahn beziehungsweise von der Abförderbahn zurück auf die Transportbahn gelangt. Zusätzlich aber leistet die Vorrichtung aber auch einen Transport des Werkstückes.

In einer anderen, alternativen Ausgestaltung der Erfindung ist vorgesehen, daß zwischen der Transportbahn und der An- beziehungsweise Abförderbahn eine Bahnweiche oder Bahnkreuzung vorgesehen ist. Eine solche Ausgestaltung ist sowohl bei der Variante möglich, bei der eine Transportbahn für An- und Abförderbahn vorgesehen ist oder eine erste Transportbahn für die Anförderbahn und eine zweite Transportbahn für die Abförderbahn bestehen. In diesem Fall sorgt die Vorrichtung nicht zwingend dafür, daß das Werkstück beziehungsweise die das Werkstück tragende Palette von der Transportbahn aufgenommen beziehungsweise auf dieser abgelegt wird. Die Vorrichtung kann sich bei dieser Variante darauf beschränken, das bereits auf der Anförderbahn vorgehalten Werkstück, welches eben über eine Bahnweiche oder Bahnkreuzung von der Transportbahn ausgeschleust worden ist, dann hier aufzunehmen. Gleiches gilt natürlich im umgekehrten Falle auf der Abförderbahn.

Hieraus resultiert ein weiterer Vorteil der Erfindung, der aber auch im Allgemeinen besteht. Es wird nämlich vorgeschlagen, daß die Werkstücke auf der An- und/oder Abförderbahn, gegebenenfalls auf der Vorrichtung gepuffert werden. Ein weiteres Ziel der erfindungsgemäßen Fertigungslinie ist insbesondere eine hohe Bearbeitungsleistung, zum Beispiel eine hohe Zerspanleistung der Bearbeitungsmaschinen, zu erreichen. Notwendige Werkstückwechselzeiten müssen daher auf ein absolutes Minimum reduziert werden. Werden die zu bearbeitenden Werkstücke möglichst nahe an der Bearbeitungsmaschine vorgehalten, wird dieses Ziel erreicht, da die Transportwege möglichst kurz sind.

Eine Pufferung der zu bearbeitenden Werkstücke auf der Anförderbahn unterstützt dieses Ziel optimal. Umgekehrt kann es von Vorteil sein, fertig bearbeitete Werkstücke in schneller Folge aus der Bearbeitungsmaschine herauszufördern und zunächst auf der Abförderbahn abzulegen und erst dann, wenn zum Beispiel die Bearbeitungsmaschine wieder in Bearbeitung steht, ein Einschleusen der fertigen Werkstücke auf die Transportbahn zu bewerkstelligen und gegebenenfalls gleichzeitig die Anförderbahn wieder zu füllen.

Zur Pufferung kann dabei sowohl die An- beziehungsweise Abförderbahn unmittelbar wie aber auch die Vorrichtung vorgesehen sein, da die Vorrichtung ja für einen Transport des Gutes dient. Natürlich kann auf die Pufferung auch verzichtet werden, um die An- und Abförderbahn möglichst kurz zu halten, wenn der hierzu nötige Hallenplatz nicht vorhanden ist.

Da erfindungsgemäß vorgesehen ist, daß sich das Werkstück unmittelbar auf der An- oder Abförderbahn befinden kann, wird gemäß einer weiteren Variante der Erfindung vorgeschlagen, daß das Werkstück beziehungsweise die das Werkstück tragende Palette von der Vorrichtung von der Anförderbahn abgehoben beziehungsweise von der Vorrichtung auf der Abförderbahn abgesetzt wird. Wie bereits erwähnt, sind jeweils eigenständige Vorrichtungen für die An- beziehungsweise Abförderbahn vorgesehen.

Ein erheblicher zusätzlicher Vorteil der Erfindung besteht darin, daß die Vorrichtung auch dafür sorgt, daß das Werkstück in die Bearbeitungsmaschine eingeladen bzw. ausgeladen wird. Gemäß der Erfindung ist vorgesehen, daß die Vorrichtung das Werkstück in eine Spannvorrichtung der Bearbeitungsmaschine übergibt beziehungsweise das Werkstück aus einer Spannvorrichtung entnimmt. Die Vorrichtung leistet daher eine Vielzahl von verschiedenen Funktionen. Sie dient zunächst dafür, das Werkstück von der Transportbahn abzunehmen, um es über die Abförderbahn zur Bearbeitungsmaschine zu transportieren. Gegebenenfalls wird das Werkstück auf der Anförderbahn mit der Vorrichtung gepuffert. Die Vorrichtung sorgt danach auch für das Einlegen des Werkstückes in die Spannvorrichtung der Bearbeitungsmaschine.

Günstigerweise ist die Spannvorrichtung dabei zum Beispiel an dem das Werkstück bewegenden Werkstückschlitten angeordnet.

Bei der Entladung der Maschine bestehen natürlich genau die gleichen Vorzüge der im Bereich der Abförderbahn vorgesehenen Vorrichtung. Diese leistet gleiches im umgekehrten analogen Sinne.

In einer bevorzugten Variante der Erfindung ist vorgesehen, daß die Vorrichtung eine Greifeinrichtung für das sichere Ergreifen des Werkstückes beziehungsweise der das Werkstück tragenden Palette aufweist. Die Greifeinrichtung weist z.B. einen Greifantrieb auf, welcher Schwenkhebel derart betätigt, daß diese in einer ersten Stellung in Greiftaschen oder Hinterschneidungen der Palette oder des Werkstückes haltend eingreifen und diese in einer zweiten Stellung aus diesen herausgeschwenkt sind und so das Werkstück beziehungsweise die Palette freigibt. Eine Greifeinrichtung der vorgenannten Art ist zum Beispiel in dem Prioritätsdokument, der deutschen Patentanmeldung 103 25 878.7 ausführlich beschrieben, auf diese Ausführungen wird an dieser Stelle ausdrücklich Bezug genommen. Des Weiteren wird auf die Greifeinrichtung der Patentanmeldung "Beladesystem für eine Bearbeitungsstation", die ebenfalls auf die vorgenannte Priorität zurückgeht, vollumfänglich verwiesen. Geschickterweise ist die Greifeinrichtung dafür vorgesehen, die das Werkstück tragende Palette oder das Werkstück unmittelbar nur an einer Seite zu halten, und so das Übergeben in eine Spannvorrichtung entsprechend zu erleichtern.

In einer weiteren, erfindungsgemäßen Variante ist vorgesehen, daß die Greifeinrichtung in Bewegungsrichtung der Vorrichtung über diese vorkragt. Die Vorrichtung ist zum Beispiel als Laufwagen auf einer Führung ausgestattet und erlaubt dadurch eine Bewegung auf der Förderbahn. Gemäß dem erfindungsgemäßen Vorschlag wird die Palette beziehungsweise das Werkstück durch die Greifeinrichtung nicht unterhalb der Vorrichtung beziehungsweise des Laufwagens gehalten, sondern kragt über die Vorrichtung nach vorne vor, wodurch erreicht wird, daß beim Heranführen der Vorrichtung an die Bearbeitungsmaschine die Förderbahn nicht in den kostbaren Bearbeitungsraum der Bearbeitungsmaschine hineinreichen muß, sondern ähnlich wie eine ausgestreckte Hand das zu bearbeitende Werkstück in die Maschine hineingehalten wird.

Die Erfindung erlaubt es, daß das Werkstück beziehungsweise die das Werkstück tragende Palette von der Vorrichtung hängend und/oder stehend transportiert wird. Die Vorrichtung ist prinzipiell in der Lage, sowohl hängenden als auch stehenden Transport des Werkstückes zu ermöglichen, wodurch die Flexibilität einer solchen Anordnung erheblich erhöht wird. Insbesondere der hängende Transport hat Vorteile, da dann auch das Werkstück hängend in die Bearbeitungsmaschine gebracht wird und eine hängende Bearbeitung für die spanabhebende Bearbeitung bei der Spanableitung vorteilhaft ist.

In einer weiteren erfindungsgemäßen Variante ist vorgesehen, daß die Orientierung des Werkstückes zwischen Anförderbahn und Abförderbahn veränderbar ist. Es ist zum Beispiel vorgesehen, daß ein auf der Anförderbahn stehend oder hängend transportiertes Werkstück nach der Bearbeitungsmaschine auf der Abförderbahn hängend oder stehend oder um 90° gedreht abtransportiert wird. Während des Umsetzens des Werkstückes von der Anförderbahn auf die Abförderbahn wird vorgeschlagen das Werkstück zu drehen. Dies kann insbesondere zum Beispiel bei entsprechender Abfolge von Bearbeitungsschritten ein Vorteil sein. Erreicht wird dies durch eine zum Bearbeiten ohnehin notwendigen A-Achse oder B-Achse oder A-B-Achse in dem Werkstückschlitten der Bearbeitungsmaschine. Auf eine zusätzliche Wendestation in der Fertigungslinie kann bei einer solchen Ausgestaltung verzichtet werden. Die entsprechende Wendeeinrichtung kann aber auch zum Beispiel im Aufzug, der die beiden Förderbahnen verbindet, angeordnet sein.

Nach der Erfindung ist es möglich, daß das Werkstück auf einer Palette aufgeschraubt oder aufgespannt ist. Der Einsatz von Paletten erlaubt es, immer die gleichen normierten Elemente für den Transport und das Spannen der Palette, unabhängig von der Werkstückausgestaltung, zu haben. Nachteilig bei dem Aufspannen des Werkstückes auf eine Palette ist, daß natürlich die Palette eine Bauhöhe aufweist, die zu Lasten des Bearbeitungsraumes in der Bearbeitungsmaschine geht. Das bedeutet, die Bearbeitungsmaschine muß entsprechend größer gebaut werden, wenn auch noch eine Palette, die nicht zu bearbeiten ist, mit aufgenommen werden soll. In einer Variante ist deshalb vorgesehen, die Palette nur zum Transport zu verwenden. Das Werkstück liegt auf der Palette lose auf, die Palette wird auf der Anförderbahn geparkt und nur das Werkstück wird mit der Vorrichtung in die Bearbeitungsstation geladen.

Die Erfindung sieht aber auch vor, daß die Greifeinrichtung das stehende Werkstück direkt ergreift und an die Spannvorrichtung in der Bearbeitungsstation übergibt. Es ist nach der Erfindung also möglich, auf den Einsatz einer Palette zu verzichten. Nach der Erfindung ist es auch möglich, die Palette sowohl bei einem stehenden wie auch bei einem hängenden Transport des Werkstückes einzusetzen.

In einer weiteren Ausgestaltung der Erfindung wird vorgeschlagen, daß pro Ebene je zwei oder mehrere An- beziehungsweise Abförderbahnen parallel angeordnet sind und die Bearbeitungsmaschine gleichzeitig mindestens zwei Werkstücke bearbeitet. Eine solche Anordnung ist zum Beispiel bei Mehrspindelbearbeitungsmaschinen günstig, die darauf ausgelegt sind, gleichzeitig eine größere Anzahl von Werkstücken zu bearbeiten. Zum Beispiel ist vorgesehen, auf einer Palette zwei Werkstücke aufzuspannen und zwei solcher Paletten gleichzeitig in die Bearbeitungsmaschine einzuladen, wodurch in einem Bearbeitungsschritt vier Werkstücke zu bearbeiten sind. Da oftmals parallel Arbeiten auszuführen sind, ist es günstig, das Ein- und Ausladen auf beiden An- und Abförderbahnen gleichzeitig auszuführen. Dies führt günstigerweise dazu, daß die Bearbeitungsmaschine für zwei oder mehrere Werkstücke einen gemeinsamen Werkstückschlitten aufweist. Hierauf ist die Erfindung aber nicht festgelegt, da sie prinzipiell auch eine individuelle, gleichzeitige Bearbeitung von Werkstücken erlaubt, wobei dann günstigerweise die Werkstücke jeweils auf einzelnen Werkstückschlitten aufgespannt sind.

Günstigerweise wird vorgesehen, daß das An- und/oder Abfördern von Werkstücken gemeinsam oder jeweils unabhängig voneinander erfolgt. Dies hängt letztendlich davon ab, ob gleichartige Werkstücke oder ungleichartige Werkstücke in der erfindungsgemäßen Fertigungslinie gleichzeitig in einer Bearbeitungsmaschine bearbeitet werden.

Um die Leistungsfähigkeit einerseits oder aber auch die Einsatzbereitschaft andererseits zu steigern ist vorgesehen, daß Bearbeitungsmaschinen redundant in der Fertigungslinie vorgehalten sind. Erfindungsgemäß wird daher vorgeschlagen, daß mehrere Bearbeitungsmaschinen für gleiche Bearbeitungen vorgesehen sind.

In einer bevorzugten Variante der Erfindung ist vorgesehen, daß die zweite Transportbahn, welche die von einer ersten Bearbeitungsmaschine bearbeiteten Werkstücke abfördert, gleichzeitig die erste Transportbahn einer zweiten Bearbeitungsmaschine ist, zu welcher die Werkstücke zur Beabeitung angefördert werden. Bei der Hintereinanderschaltung mehrerer Bearbeitungsmaschinen resultiert, daß die Anförderbahn zunächst oben bei der ersten Bearbeitungsmaschine ist und dann bei der zweiten Bearbeitungsmaschine unten, so daß das in der ersten Bearbeitungsmaschine fertig bearbeitete Werkstück durch die Abförderbahn unten herausgefördert wird. Der Fluß der Werkstücke ist daher jeweils versetzt, wobei durch die Nacheinanderschaltung der Bearbeitungsmaschinen resultiert, daß die zweite Transportbahn, welche die von der ersten Bearbeitungsmaschine bearbeiteten Werkstücke abfördert, gleichzeitig die erste Transprort einer zweiten, hinter der ersten Bearbeitungsmaschine liegenden zweiten Bearbeitungsmaschine ist.

Ein weiterer Vorteil der Erfindung ist, daß die Vorrichtung einen, mit dem Werkstück beziehungsweise der Palette zusammenwirkenden, gegebenenfalls die Greifeinrichtung tragenden Halter aufweist und der Halter derart bewegbar ist, um das Werkstück beziehungsweise die Palette von der Transportbahn aufzuheben oder auf diese abzusetzen. In gleicher Weise kann der Halter dafür dienen, die Palette beziehungsweise das Werkstück aus der Spannvorrichtung abzuheben oder auf diese aufzusetzen. Hierfür besitzt der Halter günstigerweise einen bevorzugt als Vertikalantrieb ausgestatteten Antrieb und erlaubt eine Höhenverstellung gegenüber der Vorrichtung. Durch eine solche Ausgestaltung wird das Ein- oder Absetzen entweder auf der Transportbahn oder in der Spannvorrichtung erheblich erleichtert, auf entsprechende Anordnungen in diesem Bereich kann günstigerweise verzichtet werden.

Alternativ ist es aber auch möglich, entweder die Transportbahn abzusenken oder die An- beziehungsweise Abförderbahn anzuheben, um das Gleiche zu erreichen. Es wird daher in einer weiteren erfindungsgemäßen Variante vorgeschlagen, die Transportbahn partiell, insbesondere im Bereich der An- beziehungsweise Abförderbahn absenkbar beziehungsweise anhebbar auszugestalten und das Werkstück beziehungsweise die Palette auf die Vorrichtung zu übergeben beziehungsweise von der Vorrichtung aufzunehmen. Natürlich kann Analoges mit der Förderbahn erreicht werden, die entsprechend ausgebildet ist.

Neben der Variante, daß die Transportbahn derart absenkbar ist, daß das Werkstück beziehungsweise die Palette direkt auf die Vorrichtung übergeben wird, ist es gemäß einer anderen Variante möglich, die Transportbahn partiell, insbesondere im Bereich der An- beziehungsweise Abförderbahn absenkbar beziehungsweise anhebbar auszugestalten, um das Werkstück beziehungsweise die Palette auf die Anförderbahn zu übergeben beziehungsweise von der Abförderbahn aufzunehmen.

In der Zeichnung ist die Erfindung schematisch dargestellt. Es zeigen:
- Fig. 1, 2: in einer Draufsicht einen Teil der erfindungsgemäßen Fertigunglinie und
- Fig. 3 bis 6: jeweils in einer Ansicht verschiedene Varianten eines Details der erfindungsgemäßen Fertigungslinie.

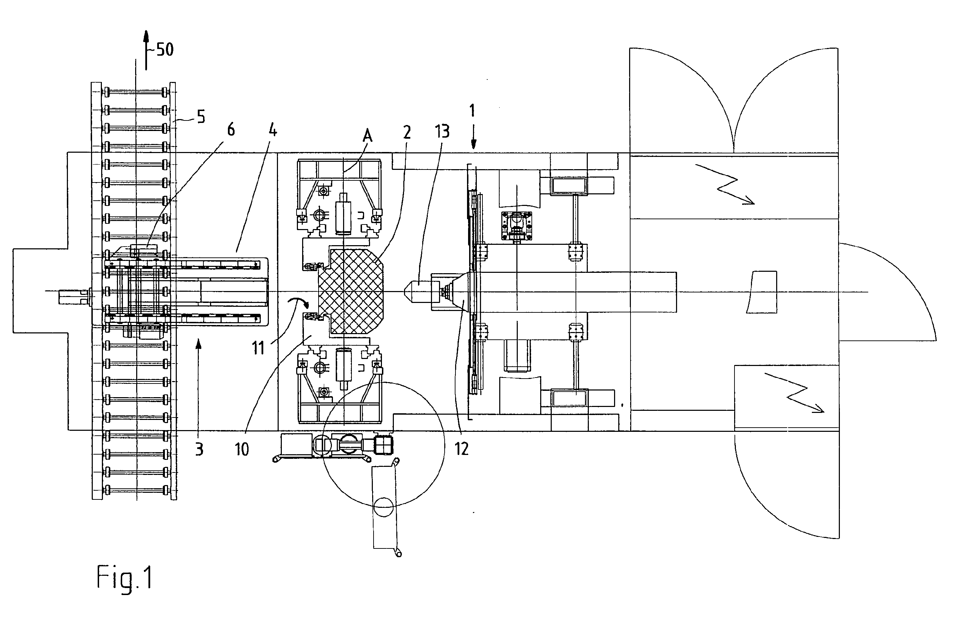

In Fig. 1 ist die erfindungsgemäße Fertigungslinie schematisch dargestellt. Die Fertigungslinie besteht aus mindestens zwei Bearbeitungsmaschinen 1, wobei in Fig. 1 nur eine solche ausschnittsweise aus der erfindungsgemäßen Fertigungslinie gezeigt ist. Die Bearbeitungsmaschine 1 dient dazu, Werkstücke 2 zu bearbeiten. Als Bearbeitung können hier zum Beispiel spanabhebende Bearbeitungen aber auch jede andere Art von Bearbeitung vorgesehen sein. Hierzu zählen insbesonder auch Meß- und Kalibrierstationen, Wendestationen und so weiter, also jedwege mögliche Bearbeitung für ein Werkstück. Es ist jedoch auch sinnvoll nur eine Bearbeitungsmaschine auf diese Weise mit verschiedenen Paletten (Werkstücken) zu Be- und Entladen.

Die Werkstücke 2 werden auf einer Transportbahn 5 von Bearbeitungsmaschine zu Bearbeitungsmaschine transportiert. Wie in Fig. 1 gezeigt, läuft die Transportbahn 5 von unten nach oben, wobei die Hauptförderrichtung 50 durch den Pfeil nach oben gekennzeichnet ist. Weitere, im Bearbeitungsschritt nachfolgende Bearbeitungsmaschinen wären in Richtung des Pfeiles 50 angeordnet.

Vorgenannte Fertigungslinien werden zum Beispiel in Transferstaßen oder komplexen Fertigungsstraßen eingesetzt. Durch eine Vielzahl hintereinander angeordneter Bearbeitungsmaschinen wird dadurch eine sehr komplexe Bearbeitung der Werkstücke möglich.

Rechtwinklig zur Transportbahn 5 anschließend ist eine Anförderbahn 3 sowie eine Abförderbahn 4 vorgesehen. Da diese beiden erfindungsgemäß übereinander angeordnet sind, ist nur eine der beiden Förderbahnen 3, 4 von oben sichtbar.

Das Werkstück 2 wird von der Transportbahn 5 auf die Anförderbahn 3 ausgeschleust und in die Bearbeitungsmaschine 1 transportiert, wo ein Werkstück 2 bereits in einer Bearbeitungsstellung, im Werkstückschlitten 10 durch die Spannvorrichtung 11 aufgespannt gezeigt ist.

In diesem Beispiel ist als Bearbeitungsmaschine 1 zum Beispiel eine spanabhebende Bearbeitung mit der Werkzeugspindel 12 vorgesehen. Am Kopf der Werkzeugspindel 12 ist ein Bearbeitungswerkzeug 13 angeordnet.

Gemäß der Erfindung ist vorgesehen, daß eine Transportbahn 5 mit der in verschiedenen Ebenen angeordneten Anförderbahn 3 beziehungsweise Abförderbahn 4 zusammenwirkt.

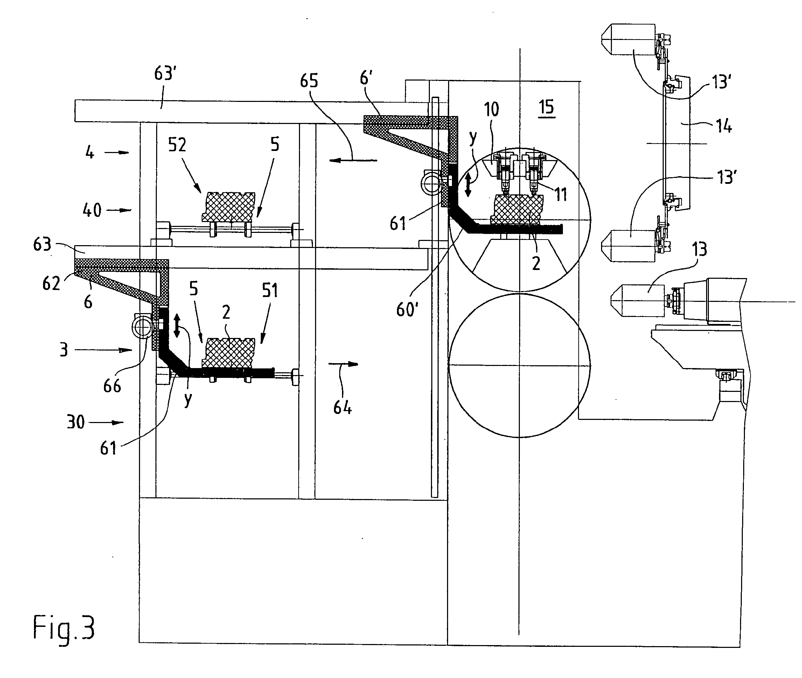

In Fig. 3 ist hingegen gezeigt, daß erfindungsgemäß zwei Transportbahnen 51, 52 vorgesehen sind. Hierbei ist die erste Transportbahn 51 der Anförderbahn 3 zugeordnet, die zweite Transportbahn 52 der Abförderbahn 4.

In diesem Ausführungsbeispiel ist gut zu sehen, daß die Ebene 40 der Abförderbahn 4 über der Ebene 30 der Anförderbahn 3 liegt. Die Anförderbahn 3 ist also unterhalb der Abförderbahn 4. Es ist aber auch möglich, eine umgekehrte Anordnung zu realisieren.

Das auf der ersten Transportbahn 51 angeförderte Werkstück 2 wird in dem hier in Fig. 3 dargestellten Ausführungsbeispiel von einer Vorrichtung 6 aufgenommen. Die Vorrichtung 6 besteht aus einem Laufwagen 62, der an einer im Wesentlichen horizontal orientierten Führung oder Schiene 63 geführt ist. Die Lagerung des Laufwagens 62 in der Schiene 63 ist als Anförderbahn zu charakterisieren, wenngleich die Ebene 30 der Anförderbahn die Ebene ist, auf welcher sich das Werkstück 2 tatsächlich bewegt. In dem hier gezeigten Beispiel resultiert, daß sich die Anförderbahn 3 über der Ebene 30 der Anförderbahn befindet, diese Relation kann natürlich auch umgekehrt sein.

In der in Fig. 3 gezeigten Position ist die erste Vorrichtung 6 derart zurückgezogen, damit diese mit einem Werkstück 2 beladen werden kann. Die Bewegungsrichtung des Werkstückes 2 ist dann nach rechts, durch den Pfeil 64 angedeutet in den Bearbeitungsraum der Bearbeitungsmaschine 1.

In dem in Fig. 3 gezeigten Ausführungsbeispiel ist die Bearbeitungsraum der Bearbeitungsmaschine 1 ein Werkzeugmagazin 14 vorgesehen, das eine Vielzahl von Bearbeitungswerkzeugen 13' vorhält.

Das in Fig. 3 gezeigte Ausführungsbeispiel zeigt ein auf der Vorrichtung 6 stehendes Werkstück 2, wobei in diesem Ausführungsbeispiel auf den Einsatz einer Palette verzichtet wird. Es können entsprechend größere Werkstücke 2 in der Bearbeitungsmaschine 1 bearbeitet werden. Der Werkstückschlitten 10 ist in Y-Richtung bewegbar. Die an dem Werkstückschlitten 10 angeordnete Spannvorrichtung 11 ergreift in dem hier gezeigten Ausführungsbeispiel das Werkstück 2 von oben. Die in Fig. 3 gezeigte Position entspricht der Lage, wo das bereits fertig bearbeitete Werkstück 2 aus der Bearbeitungsmaschine 1 heraustransportiert wird.

Auch die Abförderbahn 4 besitzt für den Transport des fertig bearbeiteten Werkstückes 2 eine Vorrichtung 6'. In dem hier gezeigten Ausführungsbeispiel ist die Greifeinrichtung 60' in den Bearbeitungsraum 15 eingefahren und die gabelartige Greifeinrichtung 60 unterfährt das Werkstück 2, um dieses aus der Bearbeitungsmaschine 1 herauszutransportieren.

In dem hier gezeigten Ausführungsbeispiel ist die Greifeinrichtung 60 an einem Halter 61 angeordnet, wobei der Halter 61 in Y-Richtung verschiebbar ist, um somit zum Beispiel das Werkstück 2 gegen den Schlitten 10 bewegen zu können. Diese Beweglichkeit des Halters 61 wird aber insbesondere dafür ausgenutzt, das Werkstück 2 auf der Transportbahn 5 abzusetzen oder hiervon aufzunehmen.

Nachdem die Vorrichtung 6' das Werkstück 2 aus der Bearbeitungsmaschine 1 aufgenommen hat, bewegt sich die Vorrichtung 6' nach links entlang des Pfeiles 65. Die Schiene 63, 63' ist in dem hier gezeigten Ausführungsbeispiel nach links, über die Transportbahn 5, 51, 52 nach links verlängert ausgeführt. Dies ist notwendig, da die Greifeinrichtung 60 der Vorrichtung 6 rechts vorkragt, um somit den Bearbeitungsraum 15 von ansonsten notwendigen Transportmitteln der Abförderbahn 4 beziehungsweise der Anförderbahn 3 freizuhalten.

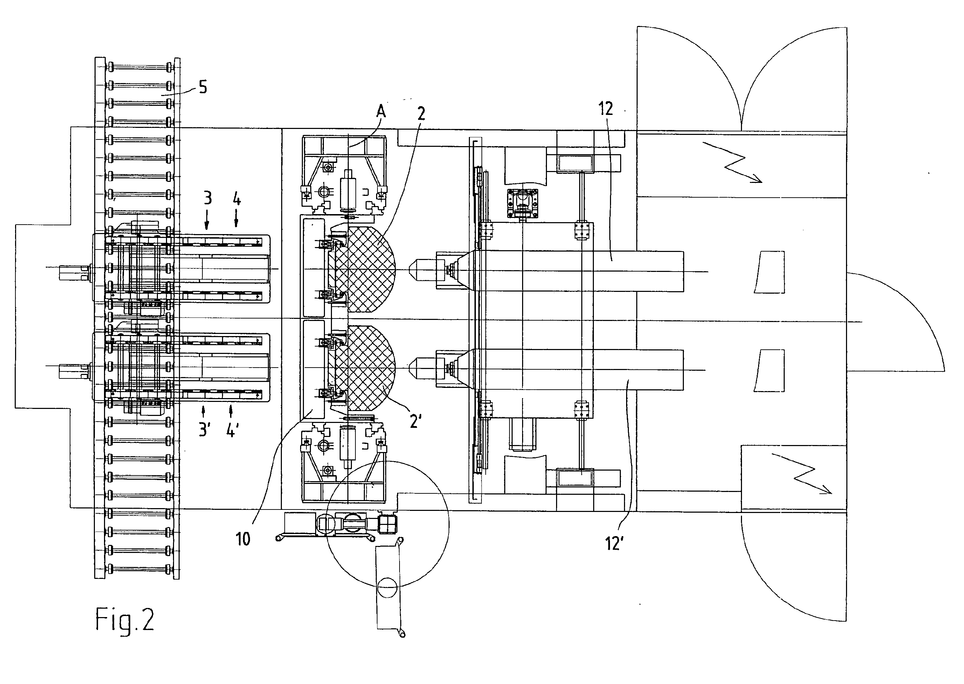

In dem in Fig. 2 gezeigten Ausführungsbeispiel ist eine Mehrspindelbearbeitungsmaschine gezeigt. Sie besitzt zwei Werkzeugspindeln 12, 12' die auf zwei Werkstücke 2, 2' gleichzeitig oder versetzt voneinander einwirken können. Es können auch mehr als zwei Spindeln vorgesehen sind. Die Werkstücke 2, 2' sind nebeneinander angeordnet, weswegen paarweise parallele Anförderbahnen 3, 3' und Abförderbahnen 4, 4' vorgesehen sind. Die Bearbeitungsmaschine weist für die beiden Werkstücke 2, 2' einen gemeinsamen Werkstückschlitten 10 auf, der auch hier um eine horizontale Achse A drehbar ist, um eine mehrseitige Bearbeitung der Werkstücke 2, 2' zu erlauben.

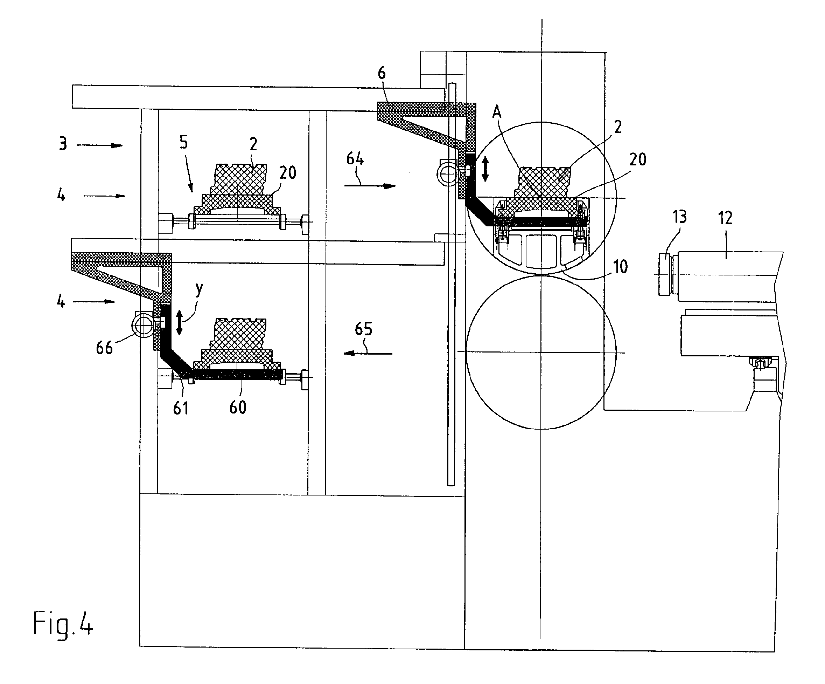

Die in Fig. 4 gezeigte Situation ist mit der in Fig. 3 sehr ähnlich. In dem in Fig. 4 gezeigten Ausführungsbeispiel ist das Werkstück 2 jeweils auf einer Palette 20 aufgespannt. Die Palette 20 liegt auf der Rollenbahn der Transportbahn 5, 51, 52 auf. Das Werkstück wird also stehend transportiert. Das stehende Transportieren setzt sich auch auf der Anförderbahn 3 beziehungsweise Abförderbahn 4 fort. Im Gegensatz zu der in Fig. 3 gezeigten Variante ist hier, in Fig. 4, die Anförderbahn 3 oben und die Abförderbahn 4 unten. Das hier gezeigte Beispiel besitzt des weiteren auch eine um die A-Achse drehbaren Werkstückschlitten 10. Es ist auch möglich, das Werkstück 2 um eine vertikale B-Achse zu drehen. Es sind auch sogenannte AB-Maschinen bekannt, die eine Drehung und A- und B-Achse erlauben.

Genauso wie in Fig. 3 ist auch in Fig. 4 der Halter 61 gegenüber dem Laufwagen 62 vertikal (Y-Achse) verschiebbar, was durch den Antrieb 66 erfolgt.

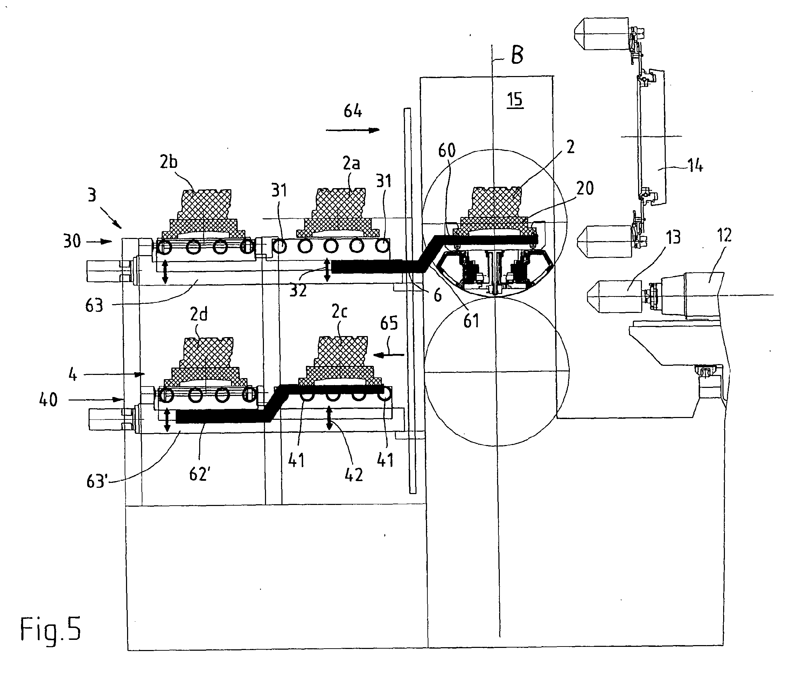

In Fig. 5 ist eine weitere erfindungsgemäße Variante gezeigt. Die Vorrichtung 6 trägt wiederum mit ihrer Greifeinrichtung 60 ein auf einer Palette 20 montiertes Werkstück 2 stehend in den Bearbeitungsraum 15. Im Gegensatz zu der Ausgestaltung nach Fig. 4, wo der Halter 61 nach unten abgewinkelt ist, ist in Fig. 5 der Halter 61 nach oben abgewinkelt, derart, daß die Ebenen 30, 40 der Anförderbahnen 3, 4 überhalb den jeweiligen Führungsschienen 63, 63' sind. In dem hier gezeigten Ausführungsbeispiel sind zusätzlich in der Anförderbahn 3 beziehungsweise Abförderbahn 4 Querrollenbahnen 31, 41 vorgesehen. Diese Querrollenbahnen 31, 41 gehören zu der Anförderbahn 3 beziehungsweise Abförderbahn 4. Es ist gut zu erkennen, daß auf der oberen Anförderbahn 3 ein erstes Werkstück 2 bereits im Bearbeitungsraum 15 eintransportiert ist, ein zweites Werkstück 2a in Warteposition, gepuffert vor dem Bearbeitungsraum 15 bereit liegt, wobei dieses Werkstück 2a auf der Querrollenbahn 31 in Warteposition liegt. Auch ist schon das übernächste Werkstück 2b herangefördert und liegt ebenfalls in einer Warteposition.

Eine ähnliche Situation ist in der Abförderbahn 4 ebenfalls gegeben. Das Werkstück 2d ist bereits wieder auf der Transportbahn 5, hier der zweiten Transportbahn 52 eingeschleust und wird wegtransportiert. Hierzu liegt das Werkstück 2d auf der Rollenbahn der Transportbahn 5 auf. Das Werkstück 2c befindet sich noch auf der Vorrichtung 6', die sich gerade aus dem Bearbeitungsraum 15 entlang des Pfeils 65 herausbewegt hat. In dem hier gezeigten Ausführungsbeispiel besitzen die Querrollenbahnen 31, 41 je eine vertikale Verstellmöglichkeit (angedeutet durch die Pfeile 32, 42), wodurch durch das Rauf- und Runterbewegen ein Aufnehmen oder Absetzen des Werkstückes 2 möglich ist.

Zum Beispiel ist die Querrollenbahn 31 nach oben angehoben, um so das Werkstück 2a von der Transportbahn 5 abzuheben. Sobald die Vorrichtung 6 der Anförderbahn 3 zurückbewegt wird, kann die Querrollenbahn 31 derart abgesenkt werden, um das Werkstück 2a auf den frei gewordenen Platz auf der Greifeinrichtung 60 zu setzen.

Im Bereich der Abförderbahn 4 wird die Querrollenbahn 41 angehoben, um das heraustransportierte Werkstück 2 von der herausgefahrenen Vorrichtung 6' abzunehmen und über die Querrollenbahn 41 in die Transportbahn 52 wieder einzuschleusen. Dort wird das Werkstück 2c auf die Transportbahn 52 durch eine Absenkbewegung der Querrollenbahn abgelegt werden.

Auch hier kragt die Greifeinrichtung 61 wieder gegenüber den Laufwagen 62 an der Vorrichtung 6 in einer Ebene parallel zur Ebene 30, 40 vor. Es erfolgt eine Pufferung sowohl auf der Anförderbahn 3 wie auf der Abförderbahn 4.

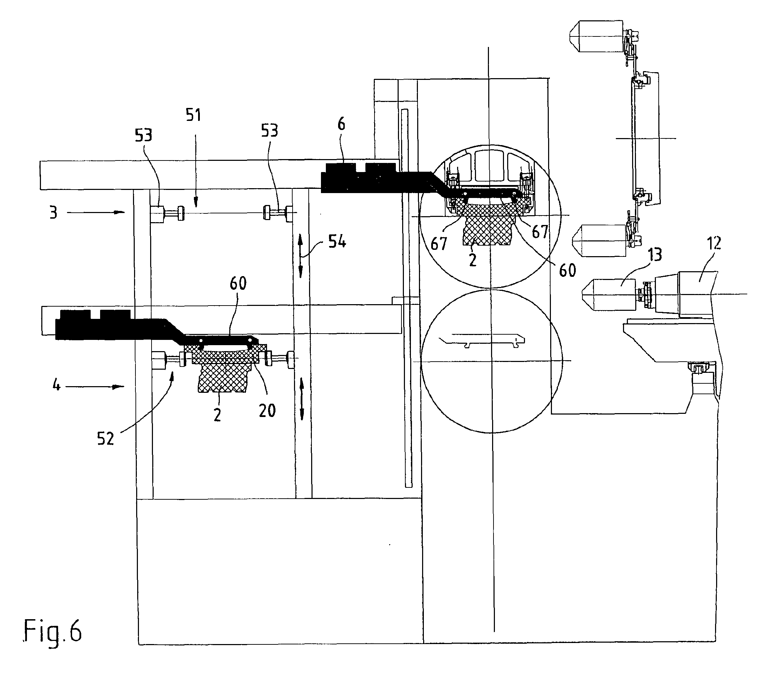

In Fig. 6 ist ein hängender Transport des Werkstückes 2, an einer Palette 20, gezeigt. Die Funktion der Greifeinrichtung 60 wird hier etwas deutlicher, da Schwenkhebel 67 erkennbar in Hintergreifungen der Palette 20 eingreifen und diese halten. Die Transportbahn 5 besteht hier aus zwei parallel verlaufenden, zwischen sich einen Freiraum bildenden Rollenreihe 53. Dies gilt sowohl für die erste Transportbahn 51 wie auch für die zweite Transportbahn 52. Da das Werkstück 2 an der Palette 20 hängt, füllt das Werkstück 2 den Zwischenraum zwischen den beiden Rollenreihen 53 aus. Umgekehrt stört zumindest die rechte Rollenreihe 53, wenn das Werkstück 2 in die Bearbeitungsmaschine 1 hineintransportiert wird. Hierzu ist zum Beispiel vorgesehen, daß die Rollenreihe 53 vertikal verschiebbar ist, was durch den Doppelpfeil 54 angedeutet ist. Natürlich wird die Rollenreihe 53, gegebenenfalls auch beide Rollenreihen, erst wegbewegt, wenn die Palette 20 sicher von der Greifeinrichtung 60 aufgenommen ist. Auch hier ist wieder die Übereinanderanordnung der Anförderbahn 3 und Abförderbahn 4 gut zu erkennen. Die störende Rollenreihe 53 ist alternativ auch um eine vertikale Achse wegschwenkbar.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Fertigungslinie, bestehend aus mindestens zwei Bearbeitungsmaschinen, welche Werkstücke bearbeiten und die Werkstücke auf einer Anförderbahn von einer Transportbahn zu der Bearbeitungsmaschine gefördert werden und von einer Abförderbahn von der Bearbeitungsmaschine zu einer Transportbahn gefördert werden, **dadurch gekennzeichnet, daß** An- und Abförderbahn (3, 4) in verschiedenen Ebenen (30, 40) übereinander angeordnet sind.

2. Fertigungslinie nach Anspruch 1, **dadurch gekennzeichnet, daß** die Bearbeitungsmaschine einen bewegbaren Werkstückschlitten (10) für das Werkstück (2) aufweist und die Bewegung des Werkstückschlittens (10) für einen Transport des Werkstückes (2) von der Ebene (30) der Anförderbahn (3) zu der Ebene (40) der Abförderbahn (4) dient.

3. Fertigungslinie nach einem oder beiden der vorhergehenden Ansprüche, **dadurch gekennzeichnet, daß** die Fertigungslinie einen Aufzug für das Werkstück aufweist, der für einen Transport des Werkstückes (2) von der Ebene (30) der Anförderbahn (3) zu der Ebene (40) der Abförderbahn (4) dient

4. Fertigungslinie nach einem oder mehreren der vorhergehenden Ansprüche, **dadurch gekennzeichnet, daß** zwischen der Transportbahn (5) und der Anförderbahn (3) und/oder Abförderbahn (4) eine Übersetzereinheit vorgesehen ist.

5. Fertigungslinie nach einem oder mehreren der vorhergehenden Ansprüche, **dadurch gekennzeichnet, daß** eine erste Transportbahn (51) für die Anförderbahn (3) und eine zweite Transportbahn (52) für die Abförderbahn (4) vorgesehen ist.

6. Fertigungslinie nach einem oder mehreren der vorhergehenden Ansprüche, **dadurch gekennzeichnet, daß** die erste und zweite Transportbahn (51, 52) übereinander angeordnet sind.

7. Fertigungslinie nach einem oder mehreren der vorhergehenden Ansprüche, **dadurch gekennzeichnet, daß** für den Transport des Werkstückes (2) beziehungsweise die das Werkstück tragende Palette (20) eine Vorrichtung (6) vorgesehen ist und die Vorrichtung (6) entlang der Anbeziehungsweise Abförderbahn (3, 4) bewegbar ist.

8. Fertigungslinie nach einem oder mehreren der vorhergehenden Ansprüche, **dadurch gekennzeichnet, daß** das Werkstück (2) beziehungsweise die das Werkstück tragende Palette (20) von der ersten Vorrichtung (6) von der ersten Transportbahn (51) abgehoben beziehungsweise von der zweiten Vorrichtung (6') auf der zweiten Transportbahn (52) abgesetzt wird.

9. Fertigungslinie nach einem oder mehreren der vorhergehenden Ansprüche, **dadurch gekennzeichnet, daß** zwischen der Transportbahn (5) und der An- beziehungsweise Abförderbahn (3, 4) eine Bahnweiche oder Bahnkreuzung vorgesehen ist.

10. Fertigungslinie nach einem oder mehreren der vorhergehenden Ansprüche, **dadurch gekennzeichnet, daß** die Werkstücke (2) auf der An- und/oder Abförderbahn (3, 4), gegebenenfalls auf der Vorrichtung (6) gepuffert werden.

11. Fertigungslinie nach einem oder mehreren der vorhergehenden Ansprüche, **dadurch gekennzeichnet, daß** das Werkstück (2) beziehungsweise die das Werkstück (2) tragende Palette (20) von der Vorrichtung (6) von der Anförderbahn (3) abgehoben beziehungsweise von der Vorrichtung (6) auf der Abförderbahn (4) abgesetzt wird und/oder die Vorrichtung (6) das Werkstück (2) in eine Spannvorrichtung (11) der Bearbeitungsmaschine (1) übergibt beziehungsweise das Werkstück aus einer Spannvorrichtung (11) entnimmt.

12. Fertigungslinie nach einem oder mehreren der vorhergehenden Ansprüche, **dadurch gekennzeichnet, daß** die Vorrichtung (6) eine Greifeinrichtung (60) für das sichere Ergreifen des Werkstückes (2) beziehungsweise der das Werkstück tragenden Palette (20) aufweist.

13. Fertigungslinie nach einem oder mehreren der vorhergehenden Ansprüche, **dadurch gekennzeichnet, daß** die Greifeinrichtung (60) in Bewegungsrichtung der Vorrichtung (6) über diese vorkragt.

14. Fertigungslinie nach einem oder mehreren der vorhergehenden Ansprüche, **dadurch gekennzeichnet, daß** das Werkstück (2) beziehungsweise die das Werkstück tragende Palette (20) von der Vorrichtung (6) hängend und/oder stehend transportiert wird und/oder ein auf der Anförderbahn (3) stehend/hängend transportiertes Werkstück (2) nach der Bearbeitungsmaschine (1) auf der Abförderbahn (4) hängend/stehend abtransportiert wird und/oder das Werkstück (2) auf einer Palette (20) aufgespannt ist.

15. Fertigungslinie nach einem oder mehreren der vorhergehenden Ansprüche, **dadurch gekennzeichnet, daß** die Bearbeitungsmaschine (1) eine horizontale Drehachse (A) für das Werkstück (2) aufweist, oder eine vertikale Drehachse (B) oder beide Drehachsen (AB) und/oder mehrere Bearbeitungsmaschinen (1) für gleiche Bearbeitungen vorgesehen sind.

16. Fertigungslinie nach einem oder mehreren der vorhergehenden Ansprüche, **dadurch gekennzeichnet, daß** die Greifeinrichtung (60) insbesondere das hängende Werkstück (2) direkt oder die das Werkstück tragende Palette (20) ergreift.

17. Fertigungslinie nach einem oder mehreren der vorhergehenden Ansprüche, **dadurch gekennzeichnet, daß** pro Ebene je zwei oder mehrere An- beziehungsweise Abförderbahnen (3, 3', 4, 4') parallel angeordnet sind und die Bearbeitungsmaschine (1) gleichzeitig mindestens zwei Werkstücke (2, 2') bearbeitet.

18. Fertigungslinie nach einem oder mehreren der vorhergehenden Ansprüche, **dadurch gekennzeichnet, daß** die Bearbeitungsmaschine (1) für zwei oder mehrere Werkstücke (2, 2') einen gemeinsamen oder je einzelne Werkstückschlitten (10) aufweist und/oder das An- und/oder Abfördern von Werkstücken (2, 2') gemeinsam oder jeweils unabhängig voneinander erfolgt.

19. Fertigungslinie nach einem oder mehreren der vorhergehenden Ansprüche, **dadurch gekennzeichnet, daß** die zweite Transportbahn, welche die von einer ersten Bearbeitungsmaschine bearbeiteten Werkstücke abfördert, gleichzeitig die erste Transportbahn einer zweiten Bearbeitungsmaschine ist, zu welcher die Werkstücke zur Bearbeitung angefördert werden.

20. Fertigungslinie nach einem oder mehreren der vorhergehenden Ansprüche, **dadurch gekennzeichnet, daß** die Vorrichtung (6) einen, mit dem Werkstück (2) beziehungsweise der Palette (20) zusammenwirkenden, gegebenenfalls die Greifereinrichtung (60) tragenden Halter (61) aufweist und der Halter (61) derart bewegbar ist, um das Werkstück (2) beziehungsweise die Palette (20) von der Transportbahn (5) oder der Spannvorrichtung (11) abzuheben oder auf diese jeweils aufzusetzen.

21. Fertigungslinie nach einem oder mehreren der vorhergehenden Ansprüche, **dadurch gekennzeichnet, daß** die Transportbahn (5) partiell, insbesondere im Bereich der An- beziehungsweise Abförderbahn (3, 4) absenkbar beziehungsweise anhebbar ist, um das Werkstück (2) beziehungsweise die Palette (20) auf die Anförderbahn (3) zu übergeben beziehungsweise von der Abförderbahn (4) aufzunehmen und/oder die Transportbahn (5) partiell, insbesondere im Bereich der An- beziehungsweise Abförderbahn (3, 4) absenkbar beziehungsweise anhebbar ist, um das Werkstück (2) beziehungsweise die Palette (20) auf die Vorrichtung (6) zu übergeben beziehungsweise von der Verrichtung (6) aufzunehmen.
